# EUROPÄISCHE PATENTANMELDUNG

(11) **EP 0 894 655 A2**
(43) Veröffentlichungstag der Anmeldung: **03.02.1999**
(21) Anmeldenummer: 98110672.7
(22) Anmeldetag: 10.06.1998
(51) Int. Cl.: B60J 3/02

(54) **Sonnenblende für Fahrzeuge**

(30) Priorität: 23.07.1997 DE 19731534
(71) Anmelder: Johnson Controls Interiors GmbH, 42285 Wuppertal (DE)
(72) Erfinder: Viertel, Lothar, 66802 Altforweiler (DE); Couchois, Didier, 57880 Guerting (FR); Welter, Patrick, 57730 La Chambre (FR)

(57) **Zusammenfassung**

Beschrieben wird eine Sonnenblende für Fahrzeuge mit einem Sonnenblendenkörper (1) aus Kunststoff, der aus einem Hauptteil (5) und einem Endteil (6) besteht, welcher schräg relativ zum Hauptteil (5) orientierbar ist, wobei zur Verbindung zwischen dem Hauptteil (5) und dem Endteil (6) eine den Sonnenblendenkörper (1) insgesamt umhüllende, aus Folienzuschnitten (10, 11) oder dgl. gebildete Verkleidung vorgesehen ist, die in dem zwischen dem Hauptteil (5) und dem Endteil (6) liegenden Bereich zusätzlich zur Umfangsschweißnaht eine die Folienzuschnitte (10, 11) aneinanderfestlegende, eine Sollknickstelle definierende Schweißnaht (12) aufweist. Bei dieser Sonnenblende ist zur Verstärkung und Verschönerung vorgesehen daß der Sonnenblendenkörper (1) mit einer die zusätzliche Schweißnaht (12) und Sollknickstelle ringförmig umschließende, ein gewolltes Abknicken des Endteils (6) nicht behindernde Abdeckvorrichtung (13) ausgestattet ist.

## Beschreibung

Die Erfindung bezieht sich auf eine Sonnenblende für Fahrzeuge mit einem Sonnenblendenkörper aus Kunststoff, der aus einem Hauptteil und einem Endteil besteht, welcher schräg relativ zum Hauptteil orientierbar ist, wobei zur Verbindung zwischen dem Hauptteil und dem Endteil eine den Sonnenblendenkörper insgesamt umhüllende, aus Folienzuschnitten oder dgl. gebildete Verkleidung vorgesehen ist, die in dem zwischen dem Hauptteil und dem Endteil liegenden Bereich zusätzlich zur Umfangsschweißnaht eine die Folienzuschnitte aneinanderfestlegende, eine Sollknickstelle definierende Schweißnaht aufweist.

Solche Sonnenblenden mit schräg abknickbarem Endteil sind zur Anpassung an die Dachform, insbesondere im Übergangsbereich zur A-Säule geeignet und gehören zum Stand der Technik. So zeigt beispielsweise die US-A-3 610 680 eine Sonnenblende, deren Sonnenblendenkörper durch eine Perforationslinie in einen Hauptteil und einen Endteil unterteilt ist, wobei der Endteil schräg relativ zum Hauptteil orientierbar ist. Bei der bekannten Sonnenblende geht die Verbindung zwischen dem Hauptteil und dem Endteil des Sonnenblendenkörpers bei der normalen Benutzung der Sonnenblende schnell verloren, so daß der Endteil schlaff herunterhängt, was als unschön empfunden wird, ganz abgesehen davon, daß die Sonnenblende nur noch teilweise ihre Funktion zu erfüllen vermag.

Ausgehend von einer Sonnenblende der eingangs genannten Art liegt der Erfindung die Aufgabe zugrunde, Vorsorge dafür zu treffen, daß die Verbindung zwischen dem Hauptteil und dem abknickbaren Endteil des Sonnenblendenkörpers keines besonderen Aufwands bedarf, daß die Funktionstüchtigkeit der Sonnenblende über die gesamte Lebensdauer gewährleistet ist und daß das ästhetische Erscheinungsbild der Sonnenblende den diesbezüglichen Anforderungen der Abnehmerschaft vollauf entspricht.

Zur Lösung dieser Aufgabe ist erfindungsgemäß vorgesehen, daß der Sonnenblendenkörper mit einer die zusätzliche Schweißnaht und Sollknickstelle ringförmig umschließende, ein gewolltes Abknicken des Endteils nicht behindernde Abdeckvorrichtung ausgestattet ist.

Die Abdeckvorrichtung vermag den Spalt zwischen dem Hauptteil und dem Endteil des Sonnenblendenkörpers auszufüllen und sich dabei am Hauptteil und Endteil gleichermaßen abzustützen, so daß es im Normalfall nicht dazu kommen kann, daß der Endteil des Sonnenblendenkörpers schlaff herunterhängt. Durch die Abdeckvorrichtung werden die durch den Schweißvorgang an den Breitseiten des Sonnenblendenkörpers sichtbaren rinnenförmigen Einziehungen ebenso den Blicken eines Betrachters entzogen wie auch etwaige Unsauberkeiten der Schweißnaht und alle Einfallstellen, so daß auch das optische Erscheinungsbild der erfindungsgemäßen Sonnenblende wesentlich verbessert werden konnte.

Die Abdeckvorrichtung sollte aus einem äußerst einfachen, kostengünstigen Bauteil bestehen, das zudem schnell und problemlos montierbar ist. Demgemäß sieht eine Ausgestaltung der Erfindung vor, daß die Abdeckvorrichtung aus einer zweiarmigen haarnadelförmigen Klammer besteht, deren freie Klammerarmenden über eine daran angeformte Verhakungsausbildung aneinander festgelegt sind. Es versteht sich, daß solch eine Klammer keine herstellungs- oder montagetechnischen Schwierigkeiten bereitet. Die Klammer wird man als Kunststoff-Spritzgußteil herstellen und durch einfaches Aufschieben und anschließendes Zusammenklipsen montieren können.

Die Abdeckvorrichtung kann auch aus zwei U-förmigen miteinander verrastbaren Klammerteilen mit an den freien Schenkelenden ausgebildeten Verhakungsmitteln bestehen. Dabei können die U-Schenkel mit gleicher oder ungleicher Schenkellänge ausgebildet sein.

Um das gewollte Abknicken des Endteils nicht zu behindern, empfiehlt es sich, daß die Abdeckvorrichtung zumindest an den dem Sonnenblendenkörper anliegenden Seiten abgerundet ausgebildet ist. Aus Gründen verbesserter Optik und verbesserten Stylings empfiehlt sich die Ausbildung einer allgemeinen Abrundung mit einem z. B. ovalen Querschnitt der Klammerarme.

Ein Ausführungsbeispiel der Erfindung wird im folgenden anhand der Zeichnung näher erläutert, und es zeigen:
- Fig. 1: einen Sonnenblendenkörper in Ansicht,
- Fig. 2: einen Schnitt B - B nach Fig. 1,
- Fig. 3: eine erste Ausführungsform,
- Fig. 4: eine zweite Ausführungsform und
- Fig. 5: eine dritte Ausführungsform einer Abdeckvorrichtung.

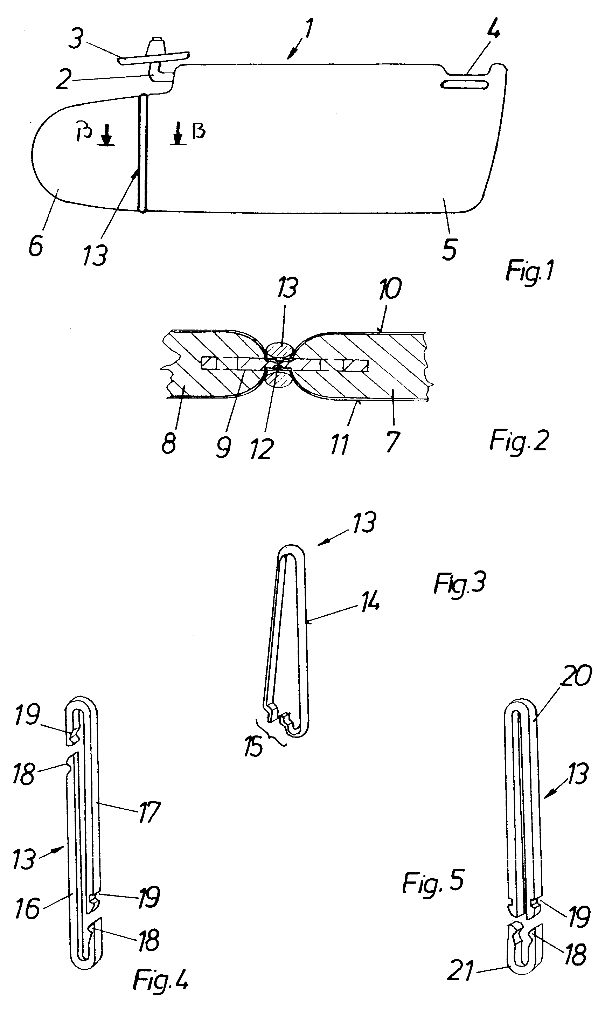

Fig. 1 zeigt den Sonnenblendenkörper 1 einer Fahrzeugsonnenblende mit einer Sonnenblendenachse 2, einem Lägerböckchen 3 und einer Aufhängebrücke 4 zur üblichen Anordnung und Befestigung der Sonnenblende oberhalb einer Windschutzscheibe an der Fahrzeugkarosserie.

Der Sonnenblendenkörper 1 ist unterteilt in einen Hauptteil 5 und einen Endteil 6, welcher schräg relativ zum Hauptteil 5 orientierbar ist. Der Hauptteil 5 besteht aus einem Kunststoffkörper 7, wie auch der Endteil aus einem Kunststoffkörper 8 besteht. Bei den Kunststoffkörpern 7, 8 kann es sich um geschäumte, geblasene oder spritzgegossene Körper handeln. Die Körper 7 und 8 können auch aus einem anderen Material z. B. aus einem natürlichen oder synthetischen Preßstoff oder dgl. bestehen. Die Kunststoffkörper 7, 8 sind zweckmäßigerweise aber nicht notwendigerweise über einen Einlagekörper 9, der in beiden Körpern eingelagert ist, miteinander verbunden. Der Sonnenblendenkörper 1 ist insgesamt mit einer aus Folienzuschnitten 10, 11 gebildeten Verkleidung umhüllt, wobei die Folienzuschnitte 10, 11 dem Umfang des Sonnenblendenkörpers 1 folgend mit ihren Rändern in herkömmlicherweise miteinander verschweißt sind. Eine zusätzliche Schweißnaht 12, die durchlaufend oder unterbrochen ausgeführt sein kann, ist vorgesehen, um die Folienzuschnitte 10, 11 in dem Bereich zwischen dem Hauptteil 5 und dem Endteil 6 des Sonnenblendenkörpers 1 miteinander zu verbinden. Liegt ein Einlagekörper 9 vor, erfolgt die Verbindung der Folienzuschnitte 10, 11 mit dem Einlagekörper 9 oder durch darin ausgebildete Öffnungen hindurch. Die Schweißnaht 12 definiert eine Sollknickstelle für den Endteil 6.

Wie die Fig. 1 und 2 zeigen, ist der Verbindungsbereich zwischen dem Hauptteil 5 und dem Endteil 6 des Sonnenblendenkörpers 1 mit einer Abdeckvorrichtung 13 ausgestattet, die zum einen dazu dient, einen besseren Zusammenhalt zwischen Hauptteil 5 und Endteil 6 herzustellen, damit der Endteil 6 nicht schlaff herunterhängt, was insbesondere dann der Fall sein kann, wenn auf einen Einlagekörper 9 verzichtet wird. Zum anderen dient die Abdeckvorrichtung 13 insbesondere dazu, der Sonnenblende ein verbessertes Aussehen zu verleihen, indem sie die Schweißnaht 12 sowie alle Einfallstellen im Übergangsbereich zwischen dem Hauptteil 5 und dem Endteil 6 abdeckt und damit den Blicken eines Betrachters entzieht.

Die Abdeckvorrichtung 13 ist nach Fig. 3 als einteilige haarnadelartige Klammer 14 ausgebildet, deren freie Klammerarmenden über eine daran angeformte Verhakungsausbildung 15 aneinander festlegbar sind. Die Klammer 14 umgibt den Sonnenblendenkörper 1 im Bereich der Schweißnaht 13 ringförmig nach Art einer Umreifung und stützt sich, wie aus Fig. 2 ersichtlich, sowohl am Hauptteil 5 als auch am Endteil 6 ab. Die Breitenabmessungen der Klammer 14 sind auf die Spaltbreite zwischen dem Hauptteil 5 und dem Endteil 6 abgestimmt und betragen nur wenige Millimeter.

Die Abdeckvorrichtung 13 nach Fig. 4 besteht aus zwei U-förmigen Klammerteilen 16, 17, die auf Umschlag eingesetzt werden können. Die Klammerteile 16, 17 weisen jeweils miteinander verrastbare Klipsnasen 18 und Klipsausnehmungen 19 auf. Die Klammerarme der Klammerteile 16, 17 weisen jeweils eine unterschiedliche Länge auf, was jedoch nicht zwingend ist.

Die Abdeckvorrichtung nach Fig. 5 besteht aus zwei U-förmigen Klammerteilen 20, 21, von denen das Klammerteil 20 wesentlich länger als das Klammerteil 21 ist. Die miteinander verrastbaren Klipsnasen 18 und Klipsausnehmungen 19 entsprechen denen nach Fig. 4.

Die Anbringung der neuen Abdeckvorrichtung am Sonnenblendenkörper 1 erfolgt durch bloßes Aufschieben und Verrasten.

## Patentansprüche

1. Sonnenblende für Fahrzeuge mit einem Sonnenblendenkörper (1) aus Kunststoff, der aus einem Hauptteil (5) und einem Endteil (6) besteht, welcher schräg relativ zum Hauptteil (5) orientierbar ist, wobei zur Verbindung zwischen dem Hauptteil (5) und dem Endteil (6) eine den Sonnenblendenkörper (1) insgesamt umhüllende, aus Folienzuschnitten (10, 11) oder dgl. gebildete Verkleidung vorgesehen ist, die in dem zwischen dem Hauptteil (5) und dem Endteil (6) liegenden Bereich zusätzlich zur Umfangsschweißnaht eine die Folienzuschnitte (10, 11) aneinanderfestlegende, eine Sollknickstelle definierende Schweißnaht (12) aufweist, dadurch gekennzeichnet, daß der Sonnenblendenkörper (1) mit einer die zusätzliche Schweißnaht (12) und Sollknickstelle ringförmig umschließende, ein gewolltes Abknicken des Endteils (6) nicht behindernde Abdeckvorrichtung (13) ausgestattet ist.

2. Sonnenblende nach Anspruch 1, dadurch gekennzeichnet, daß die Abdeckvorrichtung (13) aus einer zweiarmigen haarnadelförmigen Klammer (14) besteht, deren freie Klammerarmenden über eine daran angeformte Verhakungsausbildung (15) aneinander festgelegt sind.

3. Sonnenblende nach Anspruch 1, dadurch gekennzeichnet, daß die Abdeckvorrichtung (13) aus zwei U-förmigen, miteinander verrastbaren Klammerteilen (16, 17) mit an den freien Schenkelenden ausgebildeten Verhakungsmitteln (18, 19) besteht.

4. Sonnenblende nach wenigstens einem der Ansprüche 1 bis 3, dadurch gekennzeichnet, daß die Abdeckvorrichtung (13) zumindest an den dem Sonnenblendenkörper (1) anliegenden Seiten abgerundet ausgebildet ist.

5. Sonnenblende nach mindestens einem der Ansprüche 1 bis 4, dadurch gekennzeichnet, daß die Abdeckvorrichtung (13) als Kunststoff-Spritzgußteil ausgebildet ist.
